# EUROPÄISCHE PATENTSCHRIFT

(11) **EP 0 686 803 B1**
(45) Veröffentlichungstag und Bekanntmachung des Hinweises auf die Patenterteilung: **25.07.2001**
(21) Anmeldenummer: 95108615.6
(22) Anmeldetag: 06.06.1995
(51) Int. Cl.: F16P 3/12, H02H 7/085

(54) **Schliessvorrichtung zum automatischen Schliessen von Öffnungen**
Closing device for automatic closing of openings
Dispositif de fermeture pour fermer automatiquement des ouvertures

(30) Priorität: 10.06.1994 DE 4420359
(43) Veröffentlichungstag der Anmeldung: 13.12.1995
(73) Patentinhaber: ABB PATENT GmbH, 68309 Mannheim (DE)
(72) Erfinder: Beuter, Richard, D-58840 Plettenberg (DE)
(74) Vertreter: Rupprecht, Klaus, Dipl.-Ing.

(56) Entgegenhaltungen:
- EP-A- 0 148 318
- EP-A- 0 544 262
- DE-A- 3 305 359
- GB-A- 2 271 863

## Beschreibung

Die Erfindung betrifft eine Schließvorrichtung zum automatischen Schließen von Öffnungen durch ein motorgetriebenes Verschlußteil mit einer Sicherheitsschaltung, die zum Schutz von Körperteilen beim Signalisieren einer Einklemmgefahr so auf den Motor einwirkt, daß dieser durch Umkehrung seiner Laufrichtung ein Einklemmen verhindert.

Eine solche Schließvorrichtung ist aus der EP 0 148 318 A1 bekannt. Bei dieser Sicherheitsschaltung für elektromotorisch angetriebene Fensterheber für Automobile und ähnliche Fahrzeuge bewertet ein Meßsignal-Grenzsignalgeber den jeweiligen Motorstrom, indem ein Komparator einen Spannungsabfall des Motorstromes an einem Meßwiderstand mit einer Referenzspannung vergleicht. Ein Stellungsgeber signalisiert die Schließendstellung des beweglichen Verschlußteiles. Die Sicherheitsschaltung berücksichtigt bei einem Anstieg des Motorstromes über einen vorgegebenen Grenzwert hinaus das Ausgangssignals des Stellungsgebers und schaltet den Motor nur dann in Öffnungsrichtung um, wenn das Verschlußteil seine Schließendstellung noch nicht erreicht hat. Eine Reversierschaltung dient zum Reversieren des Motors, zu der eine Steuereinheit gehört, die ausgehend von einer Spannungsquelle den Motor mit Strom versorgt und die in Abhängigkeit von den ihr zugeführten Eingangssignalen die Stromrichtung des Motorstromes vorgibt. Allerdings dreht sich bei Betätigung der Fensterschließtaste der Antriebsmotor zunächst kurzzeitig in Öffnungsrichtung und bewegt die Fensterscheibe dabei abwärts, um zu vermeiden, daß ein bereits eingeklemmtes Körperteil bei Betätigung der Fensterschließtaste zunächst nochmals kurzzeitig mit der vollen Motorkraft festgeklemmt wird.

Aus der GB 2 271 863 A ist ein Verfahren zum Betätigen einer angetriebenen Fensterhebevorrichtung mit einer Sicherheitsvorrichtung bekannt, welche den Schließvorgang des Fensters aufgrund eines Detektorsignals stoppt, welches einen Zustand anzeigt, in welchem ein Hindernisobjekt von der Fensterscheibe eingeklemmt wird. Die Öffnungs/Schließ-Stellung des Fensters wird durch Zählen von Impulsen erfaßt, welche bei der Bewegung des Fensters erzeugt werden.

Eine Automatisierung von Schließvorrichtungen fördert einerseits die Bequemlichkeit, birgt andererseits aber die Gefahr von Verletzungen. Dies gilt insbesondere für Schließvorrichtungen bei Kraftfahrzeugen, da sich der Fahrzeugführer beim Fahren primär auf den Verkehr konzentriert und durch leichtfertiges oder ungewolltes Betätigen der Schließvorrichtung für sich und seine Mitfahrer eine nicht unerhebliche Gefährdung auslösen kann. So ist es leicht möglich, daß beim Schließen eines Fensters oder Schiebedachs Körperteile eingeklemmt und ggf. auch verletzt werden.

Bekannt sind Schließvorrichtungen, die den Motor direkt oder über Schaltverstärker, wie Relais und Leistungshalbleiter schalten. Um Verletzungen zu vermeiden, hat man bereits in den Rahmenteilen einer Öffnung, die durch ein Verschlußteil, also z. B. eine Scheibe oder ein Schiebedach geschlossen wird, Drucksensoren angebracht. Diese sorgen bei partiellem, auf nur einige Drucksensoren ausgeübtem Druck für ein Umschalten des Motorstroms in Öffnungsrichtung, so daß die Einklemmsituation selbsttätig wieder behoben wird.

Nachteilig an dieser Ausführung ist, daß die voreilenden, bzw. die Sensoren überragenden Lippendichtungen an den Rahmenteilen ein sicheres Reversieren des Motorstroms verhindern, da die Drucksensoren zu tief in den Rahmenteilen liegen und dadurch häufig zu spät ansprechen.

Aufgabe der Erfindung ist es, eine mit einfachen Mitteln aufgebaute Schließvorrichtung der eingangs genannten Art anzugeben.

Diese Aufgabe wird durch eine Schließvorrichtung zum automatischen Schließen von Öffnungen durch ein motorgetriebenes Verschlußteil mit einer Sicherheitsschaltung gelöst, die zum Schutz von Körperteilen beim Signalisieren einer Einklemmgefahr so auf den Motor einwirkt, daß dieser durch Umkehren seiner Laufrichtung ein Einklemmen verhindert, wobei
a) ein Meßwert-Grenzsignalgeber den jeweiligen Motorstrom bewertet, indem ein Komparator einen Spannungsabfall des Motorstromes an einem Meßwiderstand mit einer Referenzspannung vergleicht,
b) ein Stellungsgeber vorgesehen ist, der die Schließendstellung des beweglichen Verschlußteils signalisiert,
c) die Sicherheitsschaltung bei einem Anstieg des Motorstromes über einen vorgegebenen Grenzwert hinaus das Ausgangssignal des Stellungsgebers berücksichtigt und den Motor nur dann in Öffnungsrichtung umschaltet, wenn das Verschlußteil seine Schließendstellung noch nicht erreicht hat,
d) die Ausgangssignale des Stellungsgebers und des Meßwert-Grenzsignalgeber nach dem Invertieren eines der beiden Signale einer UND-Logik zugeführt sind, deren Ausgangssignal bei erhöhtem Motorstrom vor Erreichen der Schließendstellung des Verschlußteils ein Reversieren des Motors auslöst,
e) zum Reversieren des Motors eine Reversierschaltung dient, zu der eine Steuereinheit gehört, die ausgehend von einer Spannungsquelle den Motor mit Strom versorgt und die in Abhängigkeit von den ihr zugeführten Eingangssignalen die Stromrichtung des Motorstromes vorgibt,
f) ein Taster der Reversierschaltung eine Umschalttastfunktion besitzt und in Abhängigkeit von der Tastrichtung Minus- oder Pluspotential dem Eingang der Steuereinheit zuführt, wodurch diese die Stellrichtung des Motors entsprechend verändert,
g) die Steuereinheit der Reversierschaltung bei gleichzeitiger Zuleitung sowohl eines Plus- als auch eines Minussignals dem Signal Vorrang einräumt, das zu einem Öffnen des Verschlußteils führt.

Zweckmäßige Ausgestaltungen und Weiterbildungen des Erfindungsgegenstandes sind in den Unteransprüchen genannt.

Besonders vorteilhaft an der erfindungsgemäßen Schließvorrichtung ist, daß sie mit einfachen Mitteln aufgebaut werden kann und die Stellungsgeber in einem verborgenen, geschützten Bereich angeordnet werden können, der kemer menschlichen Berührung zugänglich sein muß.

Ein besonders kostengünstiger Aufbau der Schließvorrichtung läßt sich erzielen, wenn als Stellungsgeber ein Schaltkontakt dient, der beim Schließen des Verschlußteils von diesem in seiner Schließendstellung ein- oder ausgeschaltet wird. Der Schaltkontakt kann hierbei entsprechend der Eindringtiefe des jeweiligen Verschlußteils verhältnismäßig tief im zugehörigen Rahmen, hinter den Dichtungslippen, angeordnet sein.

Alternativ zum Schaltkontakt kann der Stellungsgeber auch als eine Widerstandsbrücke mit einem Potentiometer und einem Komparator im Nullzweig der Brücke aufgebaut werden. Verändert sich die Stellung des zum Potentiometer gehörigen Schleifers mit der jeweiligen Stellung des Verschlußteils, so kann bei entsprechender Abstimmung der Brücke dem Komparator bei Erreichen der Schließendstellung des Verschlußteils ein Signal zugeführt werden, das bei diesem einen Wechsel seines Ausgangspotentials bewirkt.

Die Reversierschaltung ist in vorteilhafter Weise so aufgebaut, daß das von der UND-Logik kommende Signal ggf. über ein Zeitglied verzögert einer Steuereinheit zugeführt wird, die ihrerseits die Stromflußrichtung des Motorstroms umschaltet.

Der erläuterte Aufbau der Schließvorrichtung mit logischen Bauelementen kann nur eine der vielfältigen Lösungsmöglichkeiten im Sinne des Erfindungsgedankens verdeutlichen. Eine gleichartige Wirkungsweise kann auch unter Zugrundelegung anderer Potentialverhältnisse und mit anderen logischen Schaltelementen erzeugt werden.

Ausführungsbeispiele der Erfindung sind in den Zeichnungen dargestellt und werden im folgenden näher erläutert.

Es zeigen:
- Fig. 1: den prinzipiellen Aufbau einer Schaltung mit logischen Schaltelementen für eine Schließvorrichtung unter Verwendung eines Schaltkontaktes als Stellungsgeber,
- Fig. 2: einen Ausschnitt aus Fig. 3 entlang der Schnittlinie A-A zur Verdeutlichung eines Schaltkontaktes als Stellungsgeber,
- Fig. 3: die Tür von einem PKW mit einem Fenster als Verschlußteil,
- Fig. 4: die Tür eines PKWs mit einem Potentiometer als Stellungsgeber,
- Fig. 5: eine Fig. 1 entsprechende Schaltung mit einem aus einer Widerstandsbrücke aufgebauten Stellungsgeber.

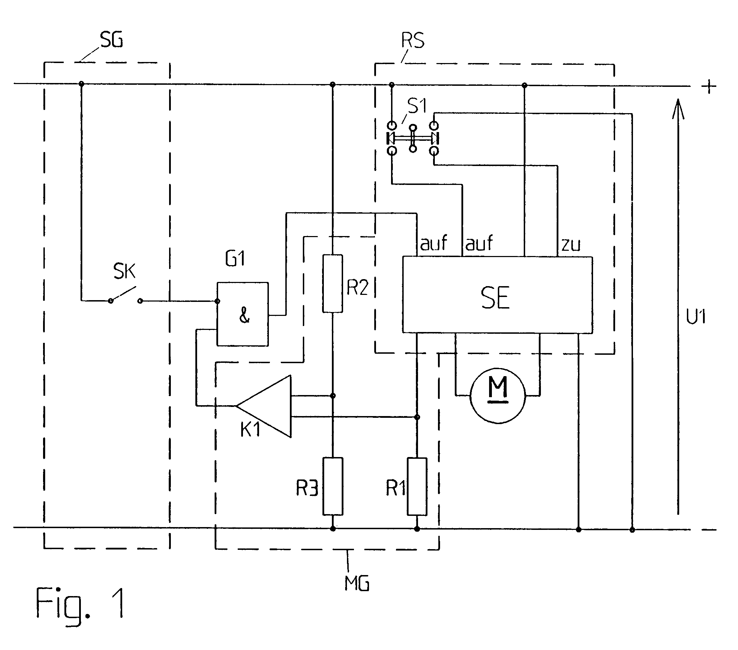

Wie Fig. 1 erkennen läßt, besitzt die Schließvorrichtung eine Reversierschaltung RS, die es ermöglicht die Stellrichtung eines Motors M unter bestimmten Bedingungen umzukehren. Diese Bedingungen erlangen unter sicherheitstechnischen Aspekten nur in der Schließphase eine Bedeutung, da nur während dieser Zeit die Gefahr eines Einklemmens besteht, so daß während der Öffnungsphase keine Umkehrung der Stellrichtung des Motors M erforderlich ist. Der Motorstrom wird bei diesem Beispiel unmittelbar vom Steuerstromkreis aufgebracht, um die Darstellung und damit das Verständnis zu erleichtern. Selbstverständlich könnte der Motor M auch im Schaltkreis eines Relais oder Verstärkers liegen. Die Erzeugung des Motorstroms erfolgt mit Hilfe einer Spannungsquelle U1 über eine Steuereinheit SE, in der sich auch Betätigungsorgane befinden. Der Motorstrom fließt dabei über einen Meßwiderstand R1.

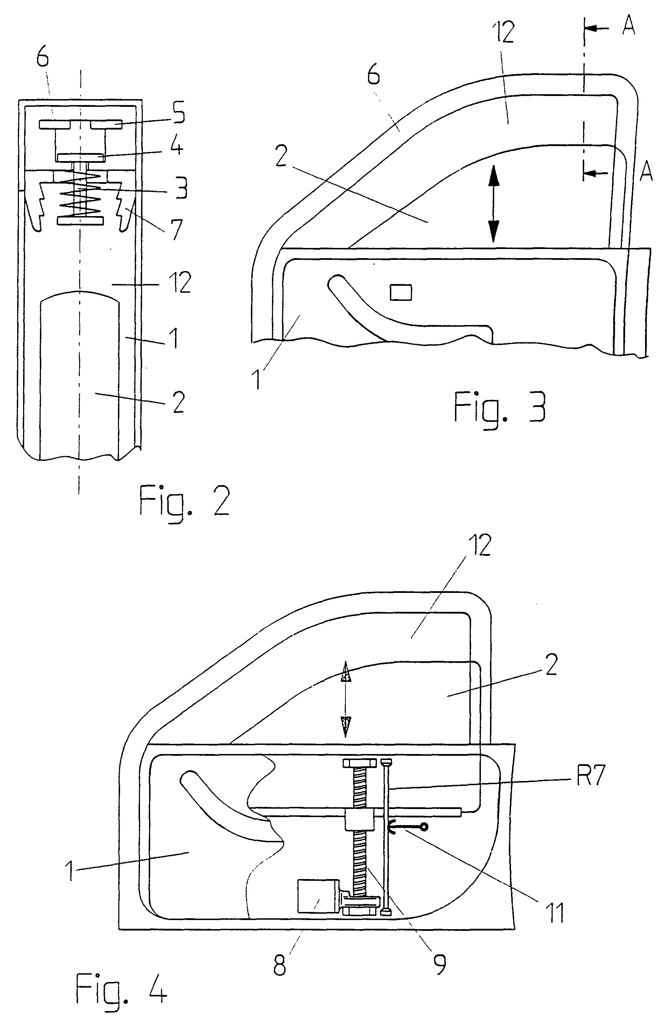

Sollte beim Schließen des Fensters 2 versehentlich ein Körperteil eingeklemmt werden, so wird der Motor M hierdurch gebremst und es entsteht ein erhöhter Spannungsabfall an dem Meßwiderstand R1. Dieser bewirkt einen Anstieg des Pluspotentials am ersten Eingang eines Komparators K1, dessen zweiter Eingang dieses Potential mit einer Referenzspannung vergleicht, die er zwischen zwei Widerständen R2, R3 abgreift, die in Reihe zwischen Plus- und Minuspotential der Spannungsquelle U1 liegen. Überschreitet das dem ersten Eingang des Komparators K1 zugeführte Pluspotential die vorgegebene Referenzspannung am zweiten Eingang, so führt der Komparator K1 ausgangsseitig einer UND-Logik bzw. einer Inhibitions-Logik G1 ein High-Signal zu. Ein zweiter Eingang der Logik G1 ist über einen Stellungsgeber SG, in diesem Fall einen Schaltkontakt SK, mit Pluspotential und somit ebenfalls mit einem High-Signal verbunden. Es sei angenommen, daß es sich bei dem Schaltkontakt SK um einen Schließer handelt, der entsprechend Figur 2 im Rahmen einer Öffnung 12 so angeordnet ist, daß er bei Erreichen der Schließendstellung durch ein Verschlußteil, also in diesem Fall durch das Fenster 2 geschlossen wird. Nach dem Schließen des Schaltkontakts SK, also dem Erreichen der Schließendstellung soll ein ansteigender Spannungsabfall am Meßwiderstand R1 kein Umschalten der Logik G1 bewirken, so daß diese als Inhibitions-Logik auszuführen ist, oder bei einer UND-Logik vor diesem Eingang ein Inverter eingefügt werden muß.

Die Logik G1 geht somit ausgangsseitig auch auf High, wenn der Spannungsabfall an R1 ansteigt und der Schaltkontakt SK noch offen ist. Dieses Signal erreicht einen ersten "Auf-Eingang" der Steuereinheit SE, womit der Motor M das angetriebene Verschlußteil, also beispielsweise das Fenster, wieder öffnet und dadurch eine Freigabe ggf. eingeklemmter Körperteile ermöglicht.

Durch Bewegen eines Tasters S1 in seine rechte Einschaltstellung wird einem "Zu-Eingang" der Steuereinheit negatives Potential zugeführt, das ein Zurücksetzen in die Grundstellung bewirkt und damit ein erneutes Schließen des Fensters ermöglicht.

Die Steuereinheit SE muß so aufgebaut sein, daß einem Plussignal an seinem ersten "Auf-Eingang" Vorrang gegenüber einem Minussignal an seinem "Zu-Eingang" eingeräumt wird. Dies ist wichtig, damit bei einer Einklemmgefahr sich das Fenster automatisch wieder öffnet. Unabhängig von der automatischen Sicherheitsöffnung kann durch eine Bewegung des Tasters S1 von seiner Ruhelage in seine linke Einschaltstellung einem zweiten "Auf-Eingang" der Steuereinheit positives Potential zugeführt werden, so daß auch ein gezieltes Öffnen des Fensters von Hand möglich ist.

Die Fig. 2 bis 4 zeigen verschiedene mechanische Teile der Schließvorrichtung. In einer Autotür 1 erkennt man eine Fensterscheibe 2, die beim Schließen einer Öffnung 12 in ihrer Schließendstellung auf einen Kontaktgeber trifft, zu dem eine Kontaktfeder 3, ein als Kontaktbrücke wirkendes bewegliches Kontaktteil 4 und Festkontaktteile 5 gehören. Der Schaltkontakt ist in einem Rahmen 6 befestigt und beidseitig von Dichtungslippen einer Dichtung 7 umgeben.

Alternativ zu dem als Schaltkontakt ausgeführten Stellungsgeber SG nach Fig. 2 soll Fig. 4 einen andersartig aufgebauten Stellungsgeber unter Zuhilfenahme eines Potentiometers R7 zeigen. Ein Schleifer 11 des Potentiometers ist so mit Antriebsmitteln des Fensters verbunden, daß er dessen Bewegungen, die von einem Motor 8 und einer Antriebsspindel 9 ausgehen, begleitet.

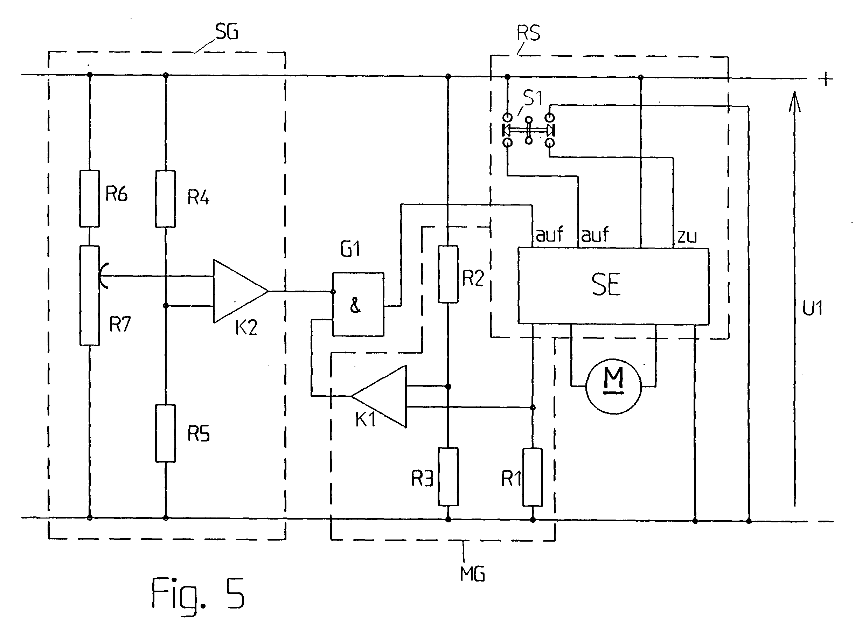

Fig. 5 entspricht dem Aufbau der Schaltung nach Fig. 1, verwendet jedoch das in Fig. 4 dargestellte Potentiometer R7 zum Aufbau eines Stellungsgebers SG. Das Potentiometer R7 gehört mit weiteren Widerständen R4, R5 und R6 zu einer Brückenschaltung, deren Nullzweig durch die Eingänge eines Komparators K2 gebildet werden, dessen Ausgang auf High geht, wenn der Schleifer 11 des Potentiometers R7 eine Stellung erreicht, die der Schließendstellung des Fensters entspricht. Alle übrigen bereits bei Fig. 1 vorgenommenen Erläuterungen gelten in gleicher Weise.

## Patentansprüche

1. Schließvorrichtung zum automatischen Schließen von Öffnungen durch ein motorgetriebenes Verschlußteil (2) mit einer Sicherheitsschaltung, die zum Schutz von Körperteilen beim Signalisieren einer Einklemmgefahr so auf den Motor (M) einwirkt, daß dieser durch Umkehren seiner Laufrichtung ein Einklemmen verhindert, wobei
a) ein Meßwert-Grenzsignalgeber (MG) den jeweiligen Motorstrom bewertet, indem ein Komparator (K1) einen Spannungsabfall des Motorstromes an einem Meßwiderstand (R1) mit einer Referenzspannung vergleicht,
b) ein Stellungsgeber (SG) vorgesehen ist, der die Schließendstellung des beweglichen Verschlußteils (2) signalisiert,
c) die Sicherheitsschaltung bei einem Anstieg des Motorstromes über einen vorgegebenen Grenzwert hinaus das Ausgangssignal des Stellungsgebers (SG) berücksichtigt und den Motor (M) nur dann in Öffnungsrichtung umschaltet, wenn das Verschlußteil (2) seine Schließendstellung noch nicht erreicht hat,
d) die Ausgangssignale des Stellungsgebers (SG) und des Meßwert-Grenzsignalgeber (MG) nach dem Invertieren eines der beiden Signale einer UND-Logik (G1) zugeführt sind, deren Ausgangssignal bei erhöhtem Motorstrom vor Erreichen der Schließendstellung des Verschlußteils (2) ein Reversieren des Motors (M) auslöst,
e) zum Reversieren des Motors (M) eine Reversierschaltung (RS) dient, zu der eine Steuereinheit (SE) gehört, die ausgehend von einer Spannungsquelle (U1) den Motor (M) mit Strom versorgt und die in Abhängigkeit von den ihr zugeführten Eingangssignalen die Stromrichtung des Motorstromes vorgibt,
f) ein Taster (S1) der Reversierschaltung (RS) eine Umschalttastfunktion besitzt und in Abhängigkeit von der Tastrichtung Minus- oder Pluspotential dem Eingang der Steuereinheit (SE) zuführt, wodurch diese die Stellrichtung des Motors entsprechend verändert,
g) die Steuereinheit (SE) der Reversierschaltung (RS) bei gleichzeitiger Zuleitung sowohl eines Plus- als auch eines Minussignals dem Signal Vorrang einräumt, das zu einem Öffnen des Verschlußteils (2) führt.

2. Schließvorrichtung nach Anspruch 1, dadurch gekennzeichnet, daß als Stellungsgeber (SG) ein Schaltkontakt (SK) dient, den das Verschlußteil (2) in seiner Schließendstellung ein- oder ausschaltet und dadurch eine Änderung des am Ausgang des Schaltkontaktes (SK) liegenden Potentials bewirkt.

3. Schließvorrichtung nach Anspruch 1, dadurch gekennzeichnet, daß als Stellungsgeber (SG) eine Widerstandsbrücke (R4 bis R7) mit einem Potentiometer (R7) und einem Komparator (K2) im Nullzweig der Brücke (R4 bis R7) dient, der Schleifer (11) des Potentiometer (R7) sich mit der Stellungsänderung des Verschlußteils (2) verschiebt und der Komparator (K2) sein Ausgangspotential wechselt, sobald der Schleifer (11) eine der Schließendstellung des Verschlußteils (2) entsprechende Stellung erreicht.

## Claims

1. A closing apparatus for the automatic closing of openings by a motor-driven closing part (2) with a safety circuit which for the protection of body parts during the signalization of a squeezing hazard acts on the motor (M) in such a way that the same prevents any squeezing by reversing its running direction, with
a) a measured-value limit transducer (MG) evaluating the respective motor current in that a comparator (K1) compares a voltage drop of the motor current at a measuring shunt (R1) with a reference voltage;
b) a position transducer (SG) being provided which signalizes the closing end position of the movable closing part (2);
c) the safety circuit considering the output signal of the position transducer (SG) in the case of a rise of the motor current over a predetermined limit value and the motor (M) only changes over to the opening direction when the closing part (2) has not yet reached its closing end position;
d) the output signals of the position transducer (SG) and the measured-value limit transducer (MG) being supplied after the inversion of one of the two signals to an AND logic circuit (G1) whose output signal initiates a reversal of the motor (M) in the case of increased motor current prior to reaching the closing end position of the closing part (2);
e) a reversing circuit (RS) being used for reversing the motor (M), which circuit comprises a control unit (SE) which based on a voltage source (U1) supplies the motor (M) with current and which determines the direction of the motor current depending on the input signal supplied to the same;
f) a momentary-contact (S1) of the reversing circuit (RS) comprises a changeover contact function and depending on the contact direction supplies minus or plus potential to the input of the control unit (SE), as a result of which the same changes the actuating direction of the motor accordingly;
g) the control unit (SE) grants the reversing circuit (RS) priority in the case of simultaneous supply of both a plus as well as a minus signal which leads to the opening of the closing part (2).

2. A closing apparatus as claimed in claim 1, characterized in that a switching contact (SK) is used as a position transducer (SG) which is activated or deactivated by the closing part (2) in its closing end position and thus causes a change of the potential lying at the output of the switching contact.

3. A closing apparatus as claimed in claim 1, characterized in that a resistor bridge (R4 to R7) with a potentiometer (R7) and a comparator (K2) in the dead branch of the bridge (R4 to R7) is used as position transducer (SG), the sliding-action contact (11) of the potentiometer (R7) displaces with the change of position of the closing part (2) and the comparator (K2) changes its output potential once the sliding-action contact (11) has reached a position corresponding to the closing end position of the closing part (2).

## Revendications

1. Dispositif de fermeture pour la fermeture automatique d'ouvertures par un élément de fermeture (2) entraîné par un moteur, avec un circuit de sécurité agissant sur le moteur (M) pour protéger des parties du corps si un risque de pincement est signalé, de telle sorte que le moteur empêche le pincement en inversant son sens de marche, dans lequel :
a) un détecteur de signal de valeur de mesure limite (MG) évalue le courant du moteur par comparaison d'une perte de tension du courant du moteur au niveau d'une résistance de mesure (R1) avec une tension de référence dans un comparateur (K1),
b) il est prévu un détecteur de position (SG) qui signale la position de fermeture finale de l'élément de fermeture mobile (2),
c) le circuit de sécurité tient compte, lorsque le courant du moteur augmente au-delà d'une valeur limite prédéterminée, du signal de sortie du détecteur de position (SG) et ne commute le moteur (M) dans le sens de l'ouverture que si l'élément de fermeture (2) n'a pas encore atteint sa position de fermeture finale,
d) les signaux de sortie du détecteur de position (SG) et du détecteur de signal de valeur de mesure limite (MG) sont amenés, après l'inversion de l'un des deux signaux, à une logique ET (G1) dont le signal de sortie déclenche l'inversion du moteur (M) lorsque le courant du moteur est augmenté avant que l'élément de fermeture (2) ait atteint sa position de fermeture finale,
e) l'inversion du moteur (M) est réalisée par un circuit d'inversion (RS) dont fait partie une unité de commande (SE) qui alimente le moteur (M) en courant à partir d'une source de tension (U1) et détermine le sens du courant du moteur en fonction des signaux d'entrée qui lui sont transmis,
f) un élément manipulateur (Si) du circuit d'inversion (RS) possède une fonction de manipulation de commutation et transmet, en fonction du sens de manipulation, un potentiel négatif ou positif à l'entrée de l'unité de commande (SE), qui modifie alors en conséquence le sens de déplacement du moteur,
g) l'unité de commande (SE) du circuit d'inversion (RS) donne priorité au signal entraînant l'ouverture de l'élément de fermeture (2) en cas de transmission simultanée d'un signal positif et d'un signal négatif.

2. Dispositif de fermeture selon la revendication 1, caractérisé en ce que le détecteur de position (SG) est formé d'un contact de commutation (SK) qui est activé ou désactivé par l'élément de fermeture (2) dans sa position de fermeture finale, ce qui modifie le potentiel présent à la sortie du contact de commutation (SK).

3. Dispositif de fermeture selon la revendication 1, caractérisé en ce que le détecteur de position (SG) est formé d'un pont de résistances (R4 à R7) avec un potentiomètre (R7) et un comparateur (K2) dans la branche neutre du pont (R4 à R7), le curseur (11) du potentiomètre (R7) se déplace avec le changement de position de l'élément de fermeture (2) et le comparateur (K2) change de potentiel de sortie dès que le curseur (11) atteint une position correspondant à la position de fermeture finale de l'élément de fermeture (2).
